# EUROPEAN PATENT APPLICATION

(11) **EP 1 607 570 A2**
(43) Date of publication of application: **21.12.2005**
(21) Application number: 05380092.6
(22) Date of filing: 10.05.2005
(51) Int. Cl.: E06C 1/22, E06C 1/32, E06C 7/08

(54) **Improved extension ladder**

(30) Priority: 14.06.2004 ES 200401434 U
(71) Applicant: Escaleras Escalibur S.L., 41011 Sevilla (ES)
(72) Inventor: Piervitali, Giulia, 41011 Sevilla (ES)
(74) Representative: Carpintero Lopez, Francisco

(57) **Abstract**

The improved extension ladder is of those of the manual, mechanical, leaning or convertible type, which can also be used in a swing-back arrangement, which comprises two or three sections, the active section, that is, that on which the feet of the user are located, being such that the profiles of the steps are rotated through an angle α° with respect to the perpendicular to the plane defined by the stiles (14, 14') of the ladder, also having an additional profile (11) integral with the narrow step (12) itself which converts it into a wide or wider step (13), with a tread for the shoe of the user sufficient for the latter to feel safe working at height. Said additional profile (11) consists of a ribbed surface (1), to prevent accidental slipping of the foot of the user, with two perpendicular flanges (2 and 2') forming a space into which this narrow step (12) fits.

## Description

### OBJECT OF THE INVENTION

The present invention relates to an extension ladder of the manual, mechanical, leaning or convertible type, which exhibits at least two sections, one of which can slide (two-section ladder) in the longitudinal direction, on the inside of the other section, until reaching the height required in each case. The movable section which can slide on the other section is that which can be raised, lowered and lean, on its upper end, on the corresponding wall, the other section being that which remains stationary and stands on its lower end on the ground.

The object of the invention is to improve the safety of the user by increasing his/her stability when working on the upper section or active section, for which purpose said section is provided with steps which occupy the entire inside of the inner sides of the stiles of same.

According to the definitions of the Standard EN 131, the invention described herein is of particular application for professional and industrial use, but other applications are not excluded.

### BACKGROUND TO THE INVENTION

According to the present state of the art the structure of an extension ladder (which in many cases may also be used in swing-back form), comprises two or three sections, each of the sections consisting of two vertical, parallel stiles (there are ladders in which the stiles of the lower section are arranged to diverge downwards). The profiles which constitute the stiles are generally of aluminium and rectangular in cross-section (other shapes are known: double T, U-shaped, oval, etc.), between which have been assembled the corresponding steps, distributed evenly over the length of the sections. These steps, generally also of aluminium, which normally consist of a profile of square, rectangular or trapezoidal cross-section (other shapes are known), are located orthogonally with respect to the stiles so that the sides of the step profiles and of the stiles are parallel to each other.

Moreover, the width or tread of the profiles forming the steps occupies more or less half, and in some cases substantially less than half, the width of the edge of the stiles.

At the present time the steps are mounted perpendicularly to the stiles, that is, their axis is perfectly orthogonal to the rectangular profile of said stiles, being parallel to the ground when the ladder is in the vertical position.

When the ladder is in use, the front section slides on the other section, the rear section standing on the ground, forming an angle of approximately 70° with respect to the vertical wall. This method of using an extension ladder implies that the sole of the user's shoe is supported only on the front edge of the step profile, with the consequent annoyance and lack of stability which this signifies for the user.

It must be borne in mind that these extension ladders, with two or three sections, sometimes extend to a considerable height, and if the feet of the user are not correctly positioned on a wide, flat surface, this situation may involve serious risks of stability for the user who, as stated, is working at a great height.

It has already been mentioned that in the present state of the art the profile corresponding to each step occupies approximately half the width of the side of the stile, whereby, in addition to the foot of the user being supported on the upper front corner, in any case, if the user wishes to stand on the entire upper face of the step profile, not only is little width available but also the surface on which he/she is standing is not horizontal, but inclined.

This is the normal situation that exists at present, that is, two or three sections, able to slide on each other, with the profiles of the steps occupying less depth than the width of the edge of the stiles and located in the orthogonal direction in all the sections, whereby if the arrangement of the deployed ladder forms a single plane (fully extended), or forms the so-called swing-back shape, the active section, that is, the section on which the user on the ladder is going to work positioning himself/herself thereon, it is in the position indicated above, that is, the profile of the step will no longer be parallel to the ground but will be inclined at approximately 20° to the ground.

However, extension ladders are known with steps that are located not orthogonally but at an angle of approximately 20° with respect to the stiles, which means that when the ladder is in the working position, leaning on the wall or in a swing-back arrangement, the upper surface or tread of the step is parallel to the ground, which means that the stability and comfort of the user is somewhat improved, but not totally, because the width of these steps is still less than the width of the stiles.

Finally, and in summary, the width of the step in the present extension ladders occupies approximately half, and in some cases much less than half, the width of the edge of the stiles in which they are embedded, whether the steps are orthogonal in shape or are rotated through an angle of approximately 20°.

Bearing in mind that in the normal case the size of a step, referring to the width of same, is 30 millimetres, and that of the stile 60 millimetres, this signifies that the surface on which the user stands is reduced, as well as being uncomfortable and unsafe.

It is stressed that the patent relates to ladders of the extension type, also usable in a swing-back arrangement, and not to ladders which are formed by two sections hinged at the top and which do not slide one on the inside of the other, including those which the Standard EN 131-1 defines as a "wide step double ladder", nor does it relate to ladders which consist of a single section only, since they could have steps of considerable width because, not having sections that slide on each other, there is no mechanical obstacle in this respect.

Why, until now, have the steps of extension ladders generally had a narrow tread with respect to the edge of the stiles?

The answer is as follows: probably until now, in the manufacture of ladders, particularly those for professional or industrial use, very little consideration has been given to the comfort of the user, which clearly also affects the safety of the latter. In a word, manufacturers have preferred to reduce the cost of the product to the detriment of quality, represented in this case by greater safety.

Thus, extension ladders are only found with a very narrow, uncomfortable and unsafe step tread.

### DESCRIPTION OF THE INVENTION

This invention, among other things, resolves the problem outlined above in a wholly satisfactory manner for all of the different aspects mentioned.

The invention described relates to an extension ladder of the manual, mechanical, leaning or convertible type, which may also be used in a swing-back arrangement, comprising two or three sections. In the ladder comprising two sections, one is wider than the other, and the narrower section is that which is raised on the inside of the wider section to position it at the desired height.

In the three section ladder, there is a still narrower section which is finally raised to the highest position, which is made to rise on the central section, and the central section in turn is raised on the section standing on the ground.

So the fundamental difference with respect to the state of the art resides in the fact that the active section, that is, that on which the feet of the user are located, has the profiles of the steps rotated through 20°, and also has a profile which is detachable but integral with the step itself, so that it occupies the entire width of the stile profiles, that is, with a tread for the user's shoe sufficient to ensure that the user is safe whilst working at height. The use of a detachable profile which covers the original step to provide greater standing width, is optional, it being perfectly possible to use a step in a single piece, welded, or riveted to the stiles, and having the same shape as that obtained when the detachable profile is applied or another such that it occupies the entire width of the stile profiles.

Moreover, since it results that these detachable or fixed profiles which form the steps are not arranged orthogonally but at an angle of 20°, the total width of the standing surface is greater than the width of the profile of the stiles of the corresponding section, so that if the width of the stile profile is normally 60 millimetres, the standing width of the corresponding step will be slightly greater (approximately 62 millimetres), which is much more than twice that found in ladders currently on the market. By using stiles with larger dimensions, for example 80 x 30 mm, the standing width will be approximately 82 mm. In the latter case it would be a "wide step" (according to the terminology in the Standard EN 131-1), and not merely a wider step.

Thus, the invention is therefore centred on converting a narrow step into a wider one, that is, one which can be a little over twice as wide as the steps on ladders normally marketed. This step may be produced by applying a detachable element to a normal square step (for example: 30 x 30 mm), or it may consist of a single profile which has a standing width of the above-mentioned size, having the shape of the detachable element or another shape which are welded or riveted to the stiles.

However, these wide or wider steps are fitted solely on the sliding section, termed the active section, which is extended and slides upwards, and on which the user is located, the remaining sections having traditional standardised steps, that is, steps which occupy approximately half the side of the stiles.

By fitting the steps at an angle α° (approximately 20°) in the active, narrower section, the invention offers two improvements:
○ With the three-section extension ladder used in a swing-back arrangement, the user uses the narrower section, with wider steps which remain horizontal to the ground, to support his/her feet and work with greater comfort and safety.
○ When the extension ladder with two or three sections is used, the user climbs via the wide section and the middle central section to the narrower or active section, previously slid along the central or second section in order to raise the ladder to the desired height, where the wide steps are, horizontal to the ground, on which the user is able to work with greater comfort and safety.

Finally, with this invention, it is achieved that the user who climbs a ladder with two or three sections, in the extended or swing-back position, will be working in a more comfortable and safer position in the uppermost part of the same (active section).

### DESCRIPTION OF THE DRAWINGS

To complete the description that is being made and with the object of assisting in a better understanding of the characteristics of the invention, in accordance with a preferred practical embodiment of the same, this description is accompanied with a set of drawings, as an integral part thereof, wherein by way of illustration and not restrictively, the following has been represented:

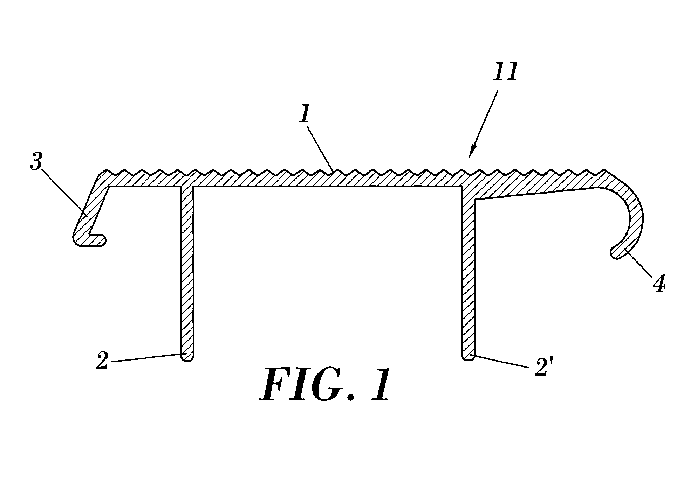

Figure 1. - Shows the additional profile which is coupled to a step in order to convert it into a wide or wider step.
Figure 2. - Shows how these wide or wider steps are used in the active section of a two-section extension ladder, utilized in the swing-back position. Detailed views are shown of the steps of each section. In the details, the narrow steps are seen in perspective and are orthogonal to the sides of the stiles; the perspective view of the other wide or wider steps, rotated through an angle of approximately 20°, is also accompanied by its top plan view.
Figure 3. - Shows how, in a fully extended, two-section extension ladder, these wide or wider steps result in the active section, in the working position, against a wall (not shown). Detailed views are shown of the steps of each section, as in the previous figure.
Figure 4. - Shows how these wide or wider steps result in the active section of a three-section extension ladder, used in the swing-back position, with the active section extended, in the working position. Detailed views are shown of the steps of each ladder as in the previous figure.
Figure 5. - Shows how, in a fully extended, three-section extension ladder, these wide or wider steps result in the active section, in the working position, against a wall (not visible). Detailed views are shown of the steps of each section as in the previous figure.
Figure 6. - Shows in detail a piece of any of the non-active stiles, with the traditional step mounted orthogonally to the stiles.
Figure 7. - Shows in detail a piece of the active stile before and after placing the additional profile shown in Figure 1 on the step. The step is fitted rotated through an angle of approximately 20° so that in the working position is parallel to the ground. Perspective and plan views of the steps are shown.
Figure 8. - Shows a perspective view of another embodiment of a wide or wider step with a single U-profile and lugs for riveting to the front and rear faces respectively of the stiles in the active section of the ladders according to the invention.
Figure 9. - Shows a perspective view of another embodiment of a wide or wider step with a single U-shaped profile which is welded to the inner lateral faces of the stiles in the active section of the ladders of the invention.

### PREFERRED EMBODIMENT OF THE INVENTION

Referring to the aforesaid figures, a description can be given of an extension ladder comprising two sections as one possible embodiment of the invention:
i. Front sliding section (6), which will be termed the narrower, active section (for example: 42 cm in width between stiles), on which the user may climb up or down, and remain stationary in the working position placing his/her feet on any of the wide steps.
ii. Fixed rear section (7), which will be termed the wider, non-active section (for example: 48 cm in width between stiles), which also has a base (8) for standing the ladder firmly and safely on the ground, when it is used extended in the working position.

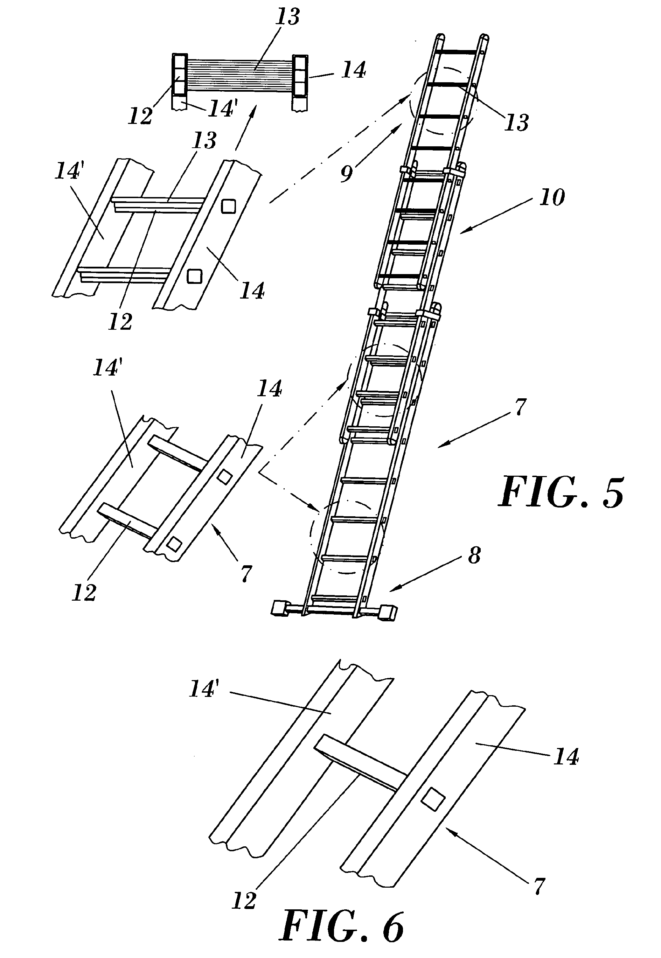

In the fixed rear section (7), the steps (12) are assembled as found in the state of the art (see figure 6): orthogonal to the sides of the stiles (14, 14'), with narrow square profiles.

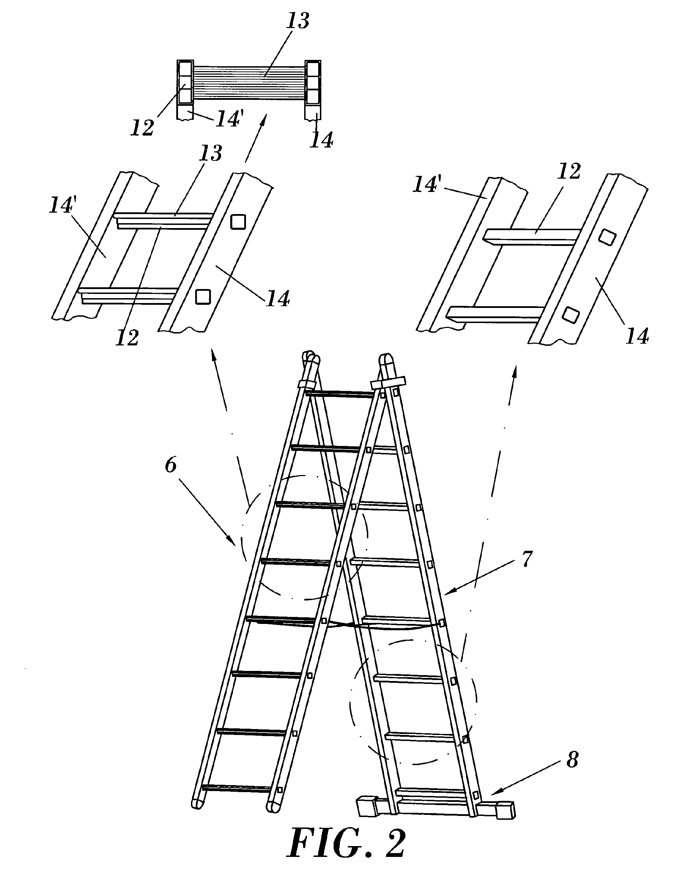

When this two-section extension ladder is used in the swing-back position (see figure 2), the ladder is supported, on one side, with the ferrules of the section (6) and the base (8) of the rear fixed section (7).

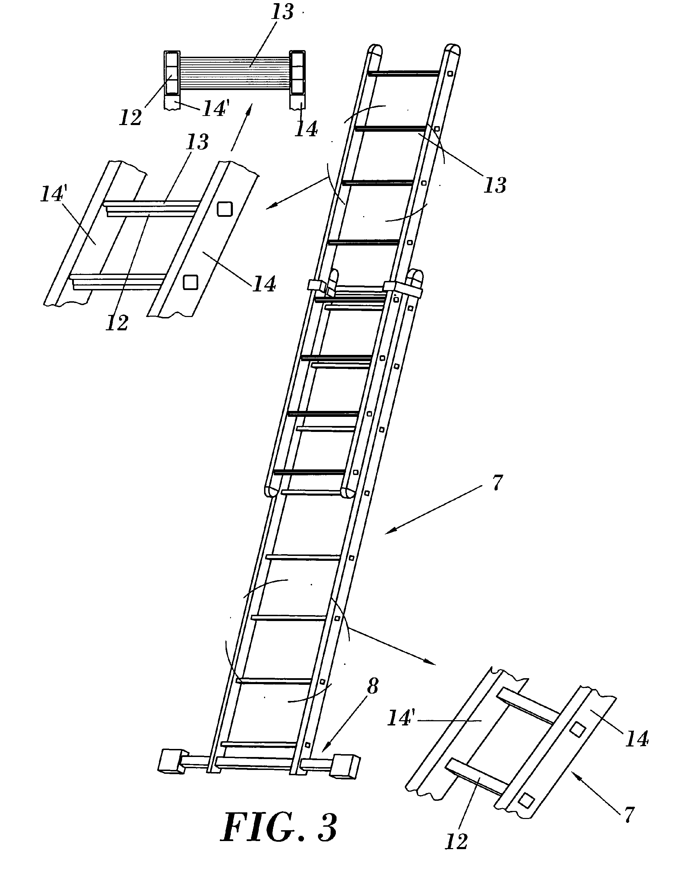

If the two-section ladder is used fully extended (see figure 3), the base (8) of the section (7) resting on the ground, the active section (6) is made to slide along the wider section (7).

The front sliding active section (6) has the steps fitted at an angle α° (approximately 20°) with the perpendicular to the plane defined by the stiles (14, 14') and moreover, an additional profile (11) is applied to said steps which converts the narrow step (12), with which this section is also originally manufactured, into a wide or wider step (13) which fully occupies the depth of the side of each stile, and since it is fitted at an angle with respect to the stile, it is in reality a little larger than said side.

Said additional profile (11) consists of a ribbed surface (1) to prevent accidental slipping of the user's foot, with two flanges (2, 2') perpendicular to said horizontal surface (1), which form a space in which the narrow step (12) fits snugly, said surface (1) extending to an angular end (3), directed inwards and to another opposing end (4) with a curved configuration. These ends (3 and 4) provide the step with greater strength. The straight segment which constitutes the angular end (3) helps the user to support the heel of his/her shoe without slipping; whilst the curved segment (4), which is located at the opposing end, looking toward the rear fixed section (7) or facing the wall on which the ladder is leaning, is foreseen in this configuration to enable the user to climb more comfortably using his/her hands, which thereby rest on a rounded edge.

The ladder may also be used extended, as shown in figure 3, leaning it against a wall on the supporting base (8) of the rear fixed section, giving it an inclination of approximately 70° and the front active section (6) is slid along this rear section (7), which is wider (48 cm compared to 42 cm, for example), raising it to the desired height. Thus, the user will start climbing on the narrow steps (12) of the rear section (7) and will encounter the wide or wider steps (13) further up, in the front section located in the upper part of the ladder, where the user wants to work, remaining stationary by standing on any of the wide or wider steps.

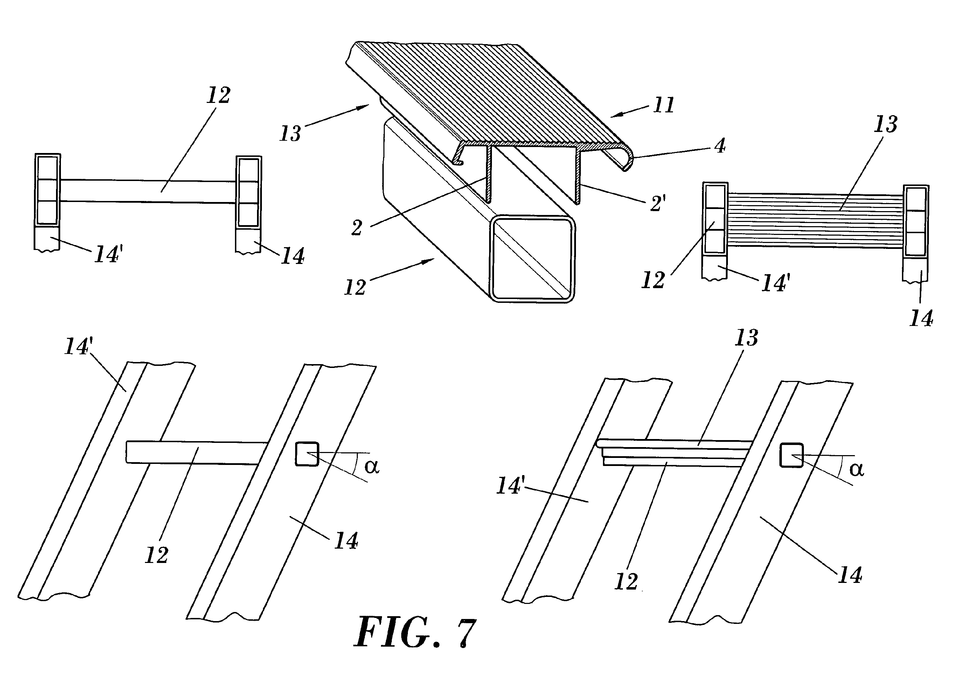

In order to convert the narrow step (12), as fitted in the rear fixed section (7), according to figure 7, into the wide or wider step (13) which incorporates the front sliding section (6), which is also originally manufactured with a narrow step (12), but rotated through the angle α°, as shown in figure 7, the profile (11) is coupled to each narrow step (12), by means of the flanges (2 and 2'), applying thereafter means for fastening, preferably two pairs of rivets which pass through the flanges (2, 2') and the inner narrow step (12) with the profile coupled. Finally, the ends of the narrow step (12), which runs on the inside, pass through the stiles (14 and 14') respectively, their outer faces being riveted.

The wide or wider step (13) is only fitted in this manner in the front active section (6), where it is assumed that the user will work, since it is the latter which is slid inside the rear section (7) and so reaches the desired working height.

Normally these wide or wider steps (13) which are fitted in the front active section (6) need not be fitted in the final steps of said section because in practice when a user climbs the whole of the ladder, he/she does not logically stand on the last three or four steps, for reasons of safety, so these last three or four steps can continue to be fitted with the traditional assembly for narrow steps.

Another embodiment of the invention relates to an extension ladder comprising three sections:
i. Front sliding active section (9), the narrowest section (for example, 35 cm wide between stiles), on which the user is able to climb up or down;
ii. Intermediate section (10), less narrow (for example, 42 cm wide between stiles), on which the user also climbs up and down;
iii. Rear fixed section (7), the widest (for example, 48 cm wide between stiles), which is also provided with a base (8) to stand the ladder firmly and safely on the ground, both when it is used in the swing-back position, or extended and leaning on the wall.

The intermediate (10) and rear (7) sections have the narrow steps (12) fitted (see figure 6) according to the present state of the art: orthogonal to the sides of the stiles and with narrow square profiles (30 mm x 30 mm).

In the front active section (9) the step assembly is made at an angle α° (approximately 20°) and coupling the profile (11) to convert the narrow step (12) into a wide or wider step (13), in an identical manner to that of the embodiment described above and as shown in figure 7.

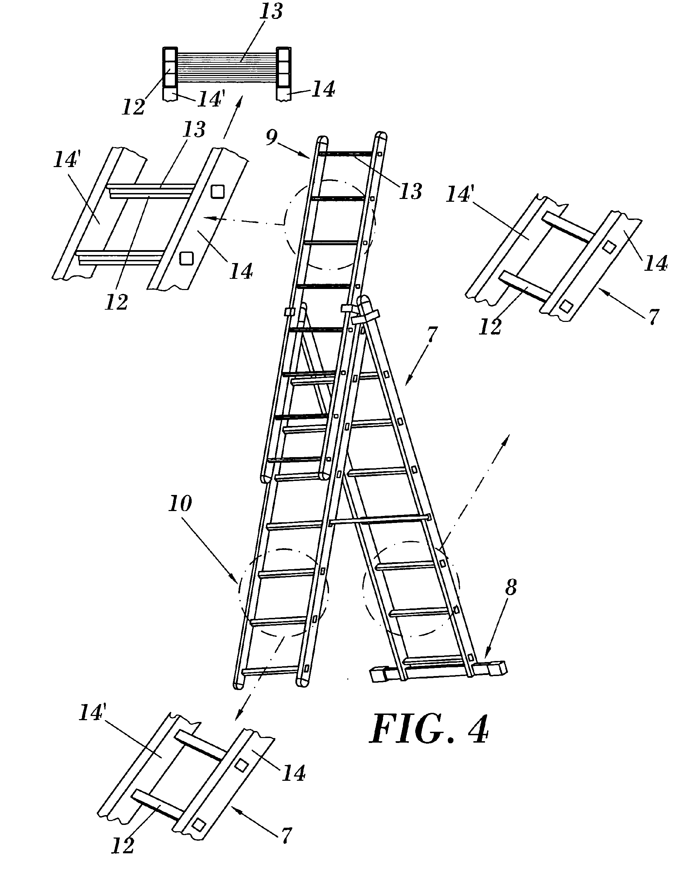

When this three-section ladder is used in the swing-back position (see figure 4), the ladder is supported, on one hand, with the ferrules of the section (10) and the base (8) of the section (7). The user can climb up/down, firstly via the intermediate section (10) and, thereafter, via the front sliding active section (9), this last sliding section (9) having previously been slid over the intermediate section (10) until reaching the desired working height, with his/her feet resting on one of the wider steps of the active section (9) which are parallel to the ground.

If the three-section ladder is used fully extended (see figure 5), the base (8) of the rear section (7) is supported on the ground. To obtain the maximum extension, or that desired, the intermediate section (10) is slid along the wider or rear section (7), and the rear or active section (9) is, in turn, slid along the latter section, to raise the ladder still more. The wide or wider steps (13) are, therefore, in the highest part of the ladder, where the user is working safely and comfortably, with his/her feet on these wide or wider steps parallel to the ground.

In a further embodiment of the invention the wide or wider step (13), which in the variant described above consists in the coupling of two profiles, the initial square profile (12) and the additional profile (11), can be embodied on the basis of a single unit, the ends (2 and 2') of the profile (13) being in this case connected by a section orthogonal to said flanges.

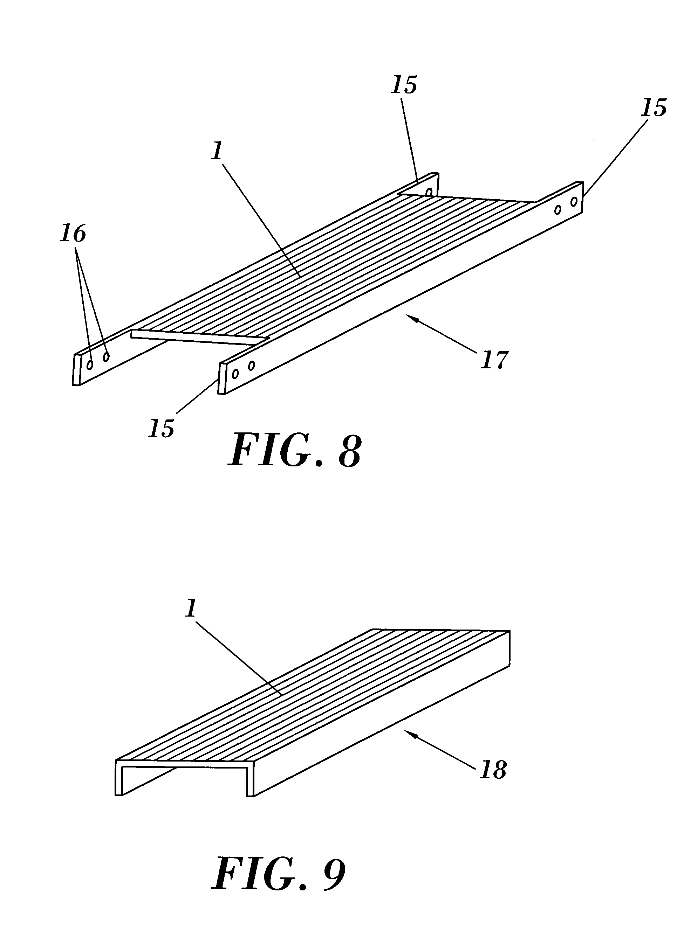

Another embodiment of the invention would be with a single wide or wider step formed by a single U-profile with lugs (17), as shown in figure 8, consisting of a single U-profile which has a ribbed horizontal surface (1), to prevent accidental slipping of the feet of the user, and which is extended in lugs (15), in which holes (16) are provided for housing rivets, so that the wide or wider steps (13) are riveted through the respective lugs (15) to the front and rear faces of the stiles in the active section (6, 9) of the two- and three-section ladders of the invention.

A final embodiment of the invention would have a single wide or wider step formed by a single U-profile (18), as shown in figure 9, with a rough or ribbed surface (1) which prevents the accidental slipping of the feet of the user, without lugs, which is connected by individual welds to the inner lateral faces of the stiles in the active section (6, 9) of the two- and three-section ladders of the invention.

In all other respects, the same considerations apply to this three-section embodiment as for the two-section ladder.

In the light this description and set of figures, an expert in the field will comprehend that the embodiments of the invention which have been described can be combined in multiple ways within the object of the invention. The invention has been described based on some preferred embodiments of the same, but for an expert in the field it will be obvious that multiple variations can be incorporated in said preferred embodiments without surpassing the object of the invention claimed.

## Claims

1. Improved extension ladder of the type known as leaning, manual, mechanical, convertible, which comprises two or three independent climbing sections, suitably assembled, by means of accessories to form a ladder of the type indicated, each of the sections being provided with lateral stiles which serve as support for the steps, the standing areas of which occupy approximately half the length of the side or edge forming the stiles, and wherein such sections, be they two or three in number, are slid, as required by the user, one on the next, so that the front or active section is narrower between stiles than the following section, and the latter is also narrower between stiles than the following section, **characterised in that** the front or active section on which the user will place his/her feet in his/her working position, is provided with steps which occupy the entire length of the edge of the stiles.

2. Improved extension ladder, according to claim 1, **characterised in that** the steps of the front or active section of the ladder are formed by an additional profile which is mounted on the three upper faces of the original step, clasping them tightly.

3. Improved extension ladder, according to claims 1 and 2, **characterised in that** the additional profile consists of a ribbed or rough surface, for standing on, which occupies the distance between stiles in the transverse direction and the entire length of the sides of the stiles in the longitudinal direction, said ribbed or rough surface being extended in its front area and downwards by a skirt coplanar to the surface of the front side of the stiles and in its rear area also downwards by a convexly curved area to make it easier for the user to grip with his/her hands when climbing up or down said section.

4. Improved extension ladder, according to the preceding claims, **characterised in that** the profile of the step of the active section can be embodied in another alternative embodiment in a single piece, having the same form as that described in claims 2 and 3, with regard to its external part.

5. Improved extension ladder, according to claim 1, **characterised in that** the profile of the step of the active section can be embodied in another alternative embodiment as a single U-profile with lugs, which are riveted to the front and rear faces of the stiles in the active section of the ladder.

6. Improved extension ladder, according to claim 1, **characterised in that** the profile of the step of the active section can be embodied in another alternative embodiment as a single U-profile which is welded to the inner lateral faces of the stiles in the active section of the ladder.

7. Improved extension ladder, according to any of the preceding claims, **characterised in that** the angle α° which each step of the active section forms with the perpendicular to the plane defined by the stiles is 20°, approximately.
